# EUROPÄISCHE PATENTSCHRIFT

(11) **EP 3 006 708 B1**
(45) Veröffentlichungstag und Bekanntmachung des Hinweises auf die Patenterteilung: **08.05.2019**
(21) Anmeldenummer: 15002715.9
(22) Anmeldetag: 19.09.2015
(51) Int. Cl.: F02D 41/30, F02D 41/00, F02D 19/06

(54) **VERFAHREN ZUM BETREIBEN EINER BRENNKRAFTMASCHINE**
METHOD FOR OPERATING A COMBUSTION ENGINE
PROCÉDÉ DESTINÉ AU FONCTIONNEMENT D'UN MOTEUR À COMBUSTION INTERNE

(30) Priorität: 06.10.2014 AT 507142014
(43) Veröffentlichungstag der Anmeldung: 13.04.2016
(73) Patentinhaber: Innio Jenbacher GmbH & Co OG, 6200 Jenbach (AT)
(72) Erfinder: Gruber, Friedrich, 6283 Hippach (AT); Spyra, Nikolaus, 6020 Innsbruck (AT); Trapp, Christian, 6067 Absam (AT); Tinschmann, Georg, 6130 Schwaz (AT); Musu, Ettore, 41051 Modena (IT)
(74) Vertreter: Torggler & Hofinger Patentanwälte

(56) Entgegenhaltungen:
- WO-A1-98/07973
- WO-A2-01/86128
- CA-A1- 2 444 163
- US-A1- 2005 072 402
- DAVID SERRANO ET AL: "Exploring the Potential of Dual Fuel Diesel-CNG Combustion for Passenger Car Engine", LECTURE NOTES IN ELECTRICAL ENGINEERING, SPRINGER, GERMANY, Bd. 191, 27. November 2012 (2012-11-27), Seiten 139-153, XP008167274, ISSN: 1876-1100, DOI: 10.1007/978-3-642-33777-2_11 ISBN: 978-3-642-05166-1

## Beschreibung

Die vorliegende Erfindung ist auf ein Verfahren zum Betreiben einer Brennkraftmaschine mit den Merkmalen des Oberbegriffs von Anspruch 1 und auf eine Brennkraftmaschine mit den Merkmalen des Oberbegriffs von Anspruch 6 gerichtet.

Bei der Auslegung von Brennkraftmaschinen besteht ein Zielkonflikt bei der Reduktion verschiedener Arten von Emissionen wie Stickoxiden (NOX), unverbrannten Kohlenwasserstoffen (HC), Kohlenmonoxid (CO) und der Reduktion von Partikelemissionen (engl. *particulate matter,* PM). Ein vielversprechender Ansatz für eine Verbrennung mit hohem Wirkungsgrad und geringen Emissionen ist das sogenannte HCCI Konzept, Homogenous Charge Compression Ignition. Hier erfolgt die Entzündung einer hochverdünnten (das heißt mager gemischt und/oder mit einer hohen Abgasrückführrate) und homogenen Kraftstoff-Luft-Mischung durch den Temperaturanstieg während des Verdichtungstaktes nahe dem oberen Totpunkt. Die stark verdünnte Kraftstoff-Luft-Mischung erlaubt eine Verbrennung mit extrem geringen Werten von Stickoxiden (NOX).

Die Selbstentzündung des Kraftstoff-Luft-Gemisches in der Brennkammer wird durch eine Kombination verschiedener Maßnahmen erreicht, wie zum Beispiel ein hohes geometrisches Verdichtungsverhältnis ε und ein Vorwärmen der Ladung durch geeignete Maßnahmen. (zum Beispiel Vorwärmen der Ladeluft oder Abgasrückführung, AGR).

Da im HCCI Brennverfahren das Kraftstoff-Luft-Gemisch mehr oder weniger gleichzeitig in der gesamten Brennkammer nahe dem oberen Totpunkt zündet, läuft das Verbrennungsereignis extrem schnell ab.

Bei Dieselmotoren kann der Zündzeitpunkt leicht durch den Einspritzzeitpunkt gesteuert oder geregelt werden. Die Steuerung bzw. Regelung des Zündzeitpunktes in einer HCCI Brennkraftmaschine ist sehr anspruchsvoll.

Aus dem Stand der Technik ist es bekannt, magere und homogene Kraftstoff-Luft-Gemische durch die Einspritzung einer geringen Menge eines zweiten Kraftstoffes zu entzünden, welcher eine höhere Neigung zur Selbstzündung aufweist als der erste Kraftstoff. Bei der Wahl des Einspritzzeitpunktes dieses zweiten Kraftstoffes kann der aktuelle Betriebszustand der Brennkraftmaschine berücksichtigt werden. Mit zunehmender Last der Brennkraftmaschine wird die Menge des zweiten Kraftstoffes angepasst.

Dieses Konzept ist als Dual-Fuel-Verbrennung bekannt. Wird der zweite Kraftstoff früh und für geringe Emissionen teilweise vorgemischt eingespritzt, wird das Verfahren als Dual-Fuel-PCCI oder RCCI-Verbrennung genannt. Wird der zweite Kraftstoff in einer solchen Weise eingespritzt, dass beide Kraftstoffe homogen gemischt werden, nennt man das Brennverfahren Dual-Fuel-HCCI.

Die Kombination zweier Kraftstoffe mit unterschiedlichen Selbstzündungseigenschaften erlaubt eine viel bessere Kontrolle des Verbrennungsvorganges. Ohne einen solchen zweiten Kraftstoff mit unterschiedlichen Selbstzündungseigenschaften kann der Zündzeitpunkt über die Abgasrückführungsrate, das ist der Anteil an zurückgeführtem Abgas, eingestellt werden. Allerdings ist die Variation der Abgasrückführungsrate keine Maßnahme mit raschem Effekt, sondern zeigt eine verzögerte Reaktion.

Wie es hinreichend aus der Literatur bekannt ist, sind alle bekannten PCCI, HCCI und RCCI und Dual-Fuel-Brennverfahren mit hohen HC und CO Emissionen verbunden.

Die US 6,659,071 zeigt eine Brennkraftmaschine, die nach einem PCCI Verfahren betrieben werden kann, wobei eine Mischeinrichtung eine Mischung eines ersten Kraftstoffes mit Ansaugluft erzeugt, eine Kraftstoffeinspritzvorrichtung gezeigt ist, die einen zweiten Kraftstoff direkt in die Brennkammer einspritzen kann, und ein Steuerungssystem gezeigt ist, welches die Einspritzung des zweiten Kraftstoffs in solcher Art und Weise regelt, dass vor der Selbstzündung durch die Verdichtung der Ladung wenigstens eine "control injection", das heißt eine Steuerungseinspritzung, stattfindet. Gemäß der US 6,659,071 kann es vorgesehen sein, dass der Hauptkraftstoff Erdgas und der zweite Kraftstoff Diesel ist.

Aus der WO 98/07973 ist ein Verfahren zur Regelung einer PCCI Brennkraftmaschine bekannt, wobei die Regelung des Verbrennungsfortschrittes durch Messen eines Betriebszustandes der Brennkraftmaschine erfolgt, welcher indikativ für den Verbrennungsfortschritt ist. Um den Beginn der Verbrennung genau zu kontrollieren, werden Temperatur, Druck, Äquivalenzverhältnis und/oder die Selbstzündungseigenschaften der Kraftstoff-Luft-Mischung gesteuert/geregelt. Weiter ist beschrieben, dass Beginn und die Geschwindigkeit der Verbrennung so geregelt werden, dass faktisch das gesamte Verbrennungsereignis innerhalb bestimmter Kurbelwinkelgrenzen stattfindet, im speziellen zwischen 20° vor dem oberen Totpunkt bis 35° nach dem oberen Totpunkt.
Dies ist darin begründet, dass der Zündbeginn und die Verbrennungsgeschwindigkeit in einer PCCI Brennkraftmaschine abhängig sind von Temperaturverhältnissen, den Druckverhältnissen und den Selbstzündungseigenschaften des Kraftstoffes, zum Beispiel der Oktan- oder Methanzahl oder Aktivierungsenergie und der Zusammensetzung der Ladeluft im Zylinder (Sauerstoffgehalt, Abgasrückführrate AGR, Feuchtigkeit, Äquivalenzverhältnis usw.).

US 6,463,907 zeigt eine HCCI Brennkraftmaschine und ein Verfahren zum Betreiben einer solchen Brennkraftmaschine, wobei durch die Zugabe eines zweiten Kraftstoffes bevorzugt Diesel, die Schwerpunktlage der Verbrennung auf einen bevorzugten Kurbelwinkel eingestellt wird. Die gewünschte Verzögerung bei der Verbrennung ist dabei unabhängig von der Brenndauer des Hauptkraftstoffes, welche wiederum über die AGR-Rate in Verbindung mit dem Kraftstoff-Luft-Verhältnis definiert wird. Durch die Zugabe des zweiten Kraftstoffes kann nun der Kurbelwinkelbereich, in welchem die Verbrennung stattfindet, über einen weiten Bereich von Drehzahlen der Brennkraftmaschine konstant gehalten werden. Wegen der relativ geringen Brenngeschwindigkeit von Erdgas nach der Zündung werden relativ geringe Abgasrückführraten und ein hoher Ladedruck eingesetzt. Leistung und Drehzahl der gegenständlichen HCCI Brennkraftmaschine sind geregelt über das Brennstoff-Luft-Verhältnis oder den Ladedruck.

Ebenfalls bekannt sind Ansätze um Zündzeiten über die externe AGR Rate zu bestimmen. Bei hohen Raten von rückgeführtem Abgas verzögert sich die Abbrandgeschwindigkeit wegen des reduzierten Sauerstoffgehaltes.

Die Kontrollstrategie für Dual-Fuel-HCCI Brennkraftmaschinen gemäß der US 6,463,907 ist es, den Zeitpunkt der Selbstzündung über die Einspritzung eines Kraftstoffes mit hoher Cetanzahl, typischer Weise Diesel, vor oder früh in der Verdichtungsphase zu bestimmen. Die zugeführte Menge an Kraftstoff mit hoher Cetanzahl hängt von der Leistung und der Drehzahl der Brennkraftmaschine ab und ist so gewählt, dass der Zündzeitpunkt auf einen geeigneten Kurbelwinkel eingestellt wird. Die Brenndauer ist davon unabhängig durch die AGR Rate geregelt.

Zusammenfassend, werden die Bedingungen für Selbstzündung eines mageren homogenen Kraftstoff-Luft-Gemisches nach dem Stand der Technik durch hohe AGR Raten, Kühlen des rückgeführten Abgases und hohe geometrische Verdichtungsverhältnisse bestimmt.

Der Nachteil der Lösungen nach dem Stand der Technik ist, dass durch das hohe geometrische Verdichtungsverhältnis ε ein sehr rascher Anstieg in der Temperatur von einem raschen Kühlen nach Zündung durch die Expansion in der Brennkammer begleitet ist.

Der Artikel von David Serrano et al. "Exploring the Potential of Dual Fuel Diesel-CNG Combustion for Passenger Car Engine", Lecture notes in electrical engineering, Springer, Germany, Bd. 191, Seiten 139-153, 27. November 2012 illustriert in Abb. 7 (rechte Graphik) den Zusammenhang zwischen dem Verbrennungsschwerpunkt MFB50 und dem Einspritzzeitpunkt des zweiten Kraftstoffes. Abb. 8 illustriert den Zusammenhang zwischen dem Einspritzzeitpunkt des zweiten Kraftstoffes und der Verbrennungsgeschwindigkeit.

Es ist daher Aufgabe der vorliegenden Erfindung, ein Verfahren und eine Brennkraftmaschine anzugeben, welches bzw. welche eine bessere Kontrolle über das Verbrennungsereignis erlaubt.

Dies wird erreicht durch ein Verfahren gemäß Anspruch 1 und durch eine Brennkraftmaschine nach Anspruch 6. Bevorzugte Ausführungsformen sind in den abhängigen Ansprüchen angegeben.

Die Zylinderladung ist zusammengesetzt aus einem ersten Kraftstoff, einem zweiten Kraftstoff, Luft und gegebenenfalls verbleibendem Gas von vorangegangenen Verbrennungszyklen und möglicherweise Gas, welches über externe Abgasrückführung zugeführt wird.

In der Auslegung jeder Selbstzündungs-Brennkraftmaschine besteht eine Reihe von Randbedingungen, wie beispielsweise Grenzwerte für mechanische Spannungen und Leistungsanforderungen, welche dann Parameter der Brennkraftmaschine, wie das geometrische Verdichtungsverhältnis ε bestimmen.

Die Erfindung ist begründet auf der überraschenden Erkenntnis, dass durch Variation einer Temperatur der Zylinderladung oder der Menge des zweiten Kraftstoffes oder einer Kombination beider Maßnahmen, die Dauer der Verbrennung in einer Weise gesteuert/geregelt werden kann, dass die Rohemissionen sehr gering sind und zu gleicher Zeit der Wirkungsgrad der Brennkraftmaschine sehr hoch ist.

Die Einlasstemperatur des Kraftstoff-Luft-Gemisches kann über Eingriff auf den Ladeluftkühler und/oder Änderungen der Abgasrückführrate beeinflusst werden.

Im Hinblick auf die Emissionen wird mit dem erfinderischen Verfahren erreicht, dass:
- die NOX Emissionen sehr gering sind, da ein sehr hohes Luftverhältnis Lambda (eine sehr magere Mischung) verwendet werden kann, wie es beispielsweise in einer fremdgezündeten Brennkraftmaschine nicht möglich wäre. Es ist ebenfalls wichtig, dass sowohl der erste als auch der zweite Kraftstoff mit Luft oder der Zylinderladung vorgemischt werden.
- Emissionen an Kohlenmonoxid (CO) und unverbrannten Kohlenwasserstoffen (HC) sehr gering sind, da die Verbrennung schnell ist und nahe dem oberen Totpunkt endet und weil die Temperatur der Zylinderladung hoch ist.
- die Rußemissionen gering sind, da sowohl der erste als auch der zweite Kraftstoff mit Luft oder der Zylinderladung vorgemischt werden.

Wie oben erwähnt, ist der Wirkungsgrad der Brennkraftmaschine überraschend hoch in Kombination mit der Reduktion aller schädlichen Emissionen, konkret NOx, Ruß, Kohlenmonoxid (CO) und HC. Die Lösungen nach dem Stand der Technik erlauben jeweils nur einige dieser Ergebnisse zu erzielen. Beispielsweise erlaubt die HCCI Verbrennung die Reduktion von NOx und Ruß, ist aber begleitet von höheren HC und CO Emissionen.

Die Vorzüge der vorliegenden Erfindung scheinen der Tatsache geschuldet, dass die Dauer der Verbrennung wesentlich kürzer ist als aus dem Stand der Technik für sehr magere Gemische bekannt. Diese Kombination konnte bislang vom Stand der Technik nicht erreicht werden.
Es ist bekannt, dass eine schnelle Verbrennung in Verbindung mit einem mageren Gemisch einen hohen Wirkungsgrad ergibt.

Wie bereits festgestellt, bietet die Erfindung die Möglichkeit über die Temperatur der Zylinderladung die Brenndauer zu beeinflussen. Indem der zweite Kraftstoff zu einer Zeit während des Verdichtungstaktes aber vor Beginn der Verbrennung zugeführt wird, wird der zweite Kraftstoff inhomogen in der brennbaren Mischung von erstem Kraftstoff und Luft vorliegen. In anderen Worten, wird es Zonen im Zylinder geben, an denen die Konzentration und/oder die Temperatur des zweiten Kraftstoffes höher ist als an anderen Orten im Zylinder. Diese Inhomogenität wird den Startpunkt der Selbstzündung im Verdichtungstakt bestimmen. Über die Wahl einer höheren Temperatur der Zylinderladung kann die Dauer der Verbrennung verkürzt und damit die Entstehung unverbrannter Kohlenwasserstoffe und CO reduziert werden und ein höherer Wirkungsgrad der Brennkraftmaschine erreicht werden. Damit vereint die Erfindung geringe Emissionen mit einem hohen Wirkungsgrad.

Es soll angemerkt sein, dass wegen der geringen Mengen an zugesetztem zweitem Kraftstoff die Temperatur des zweiten Kraftstoffes nur einen geringen Einfluss hat, während die chemische Energie des zweiten Kraftstoffes den dominierenden Einfluss hat.

Im Folgenden werden die Begriffe "Dauer der Verbrennung" und "Schwerpunktslage" (der Verbrennung) verwendet. Die Dauer der Verbrennung, auch als Brenndauer bezeichnet, ist ein Maß für den Verbrennungsfortschritt in einem Verbrennungszyklus und wird ausgedrückt als der innerhalb eines bestimmten Kurbelwinkels verbrannten Massenanteils. So bedeutet beispielsweise die Brenndauer von Δθ_{0-10%} von 15° Kurbelwinkel, dass 10 % der Ladungsmasse innerhalb 15° Kurbelumdrehung verbrannt sind.

Die Schwerpunktlage (englisch *combustion center of gravity")* der Verbrennung bezeichnet den Zustand, in welchem die Hälfte der Frischladung verbrannt ist. Dies ist auch als MFB 50 bekannt, das heißt 50 % der Masse ist verbrannt (englisch: *mass fraction burned*). Für die Begriffe sei auf Lehrbücher zu Brennkraftmaschinen verwiesen, siehe im speziellen Heywood, John B., Internal Combustion Engine Fundamentals, New York, McGraw-Hill, 1988.

Die Schwerpunktlage der Verbrennung beeinflusst den Wirkungsgrad der Brennkraftmaschine und die Menge der erzeugten Emissionen.

Besonders bevorzugt ist das Ausführungsbeispiel, worin die Schwerpunktlage der Verbrennung, das heißt, wo die Hälfte der Energie zur Verbrennung freigesetzt wurde, auf 5 bis 7°nach dem oberen Totpunkt abgestimmt ist.
Um die Schwerpunktlage der Verbrennung zu bestimmen, kann der Kurbelwinkel des Zünddruckes (engl. *peak firing pressure)* verwendet werden.

In einem weiteren bevorzugten Ausführungsbeispiel ist vorgesehen, dass wenigstens einem der Zylinder der Brennkraftmaschine wenigstens zwei Kraftstoffe mit unterschiedlichen Selbstzündungseigenschaften zugeführt werden.

Bei Gasen beziehen sich die Prozentangaben auf Volumenprozent.

Der erste Kraftstoff kann Erdgas oder ein Gemisch von Erdgas und CO₂ sein, solchermaßen, dass die Gesamtmenge von CO₂ und CH₄ größer als 80 % ist.

Der zweite Kraftstoff kann ein Kraftstoff mit einer Cetanzahl zwischen 30 und 70, vorzugsweise zwischen 40 und 60 sein. Ein Beispiel ist Dieselkraftstoff.

Gemäß einem weiteren bevorzugten Ausführungsbeispiel kann es vorgesehen sein, dass jener der wenigstens zwei Kraftstoffe, der die höhere Neigung zur Selbstzündung aufweist (dies bringt normalerweise eine höhere Cetanzahl mit sich) zu einem späteren Zeitpunkt dem wenigstens einem Zylinder der Brennkraftmaschine zugeführt wird als der Kraftstoff mit der geringeren Neigung zur Selbstzündung (dies beinhaltet normalerweise eine höhere Oktan/Methanzahl).

Der Einspritzzeitpunkt des zweiten Kraftstoffes und die Menge des zweiten Kraftstoffes, welche beide die Schwerpunktlage der Verbrennung beeinflussen, sollen so gewählt werden, dass der gewünschte Wirkungsgrad der Brennkraftmaschine erreicht wird und die Menge an Emissionen und die mechanischen Spannungen innerhalb akzeptabler Grenzen bleiben. Dies kann durch eine frühe Schwerpunktlage, beispielsweise von 0 - 15° Kurbelwinkel nach dem oberen Totpunkt erreicht werden.

Zum Beginnen wird ein breiter Parametersatz definiert. Der erste Kraftstoff sei Erdgas, der zweite Kraftstoff Diesel. Ein Beispiel:
- Einspritzzeitpunkt des zweiten Kraftstoffes sei bei 180 bis 40° Kurbelwinkel vor dem oberen Totpunkt (Zünd-OT, englisch *firing top dead center)*
- Der zweite Kraftstoff fungiert als Quelle der Selbstzündung (engl. *auto ignition source)*
- Gemisch mit Luftüberschuss und AGR, Luftverhältnis Lambda größer als 1,6 und AGR im Bereich von 0 bis 40 %, AGR dabei entweder intern oder extern, sowie gekühlt oder ungekühlt möglich
- Menge des zweiten Kraftstoffes 0,1 bis 15 % bezogen auf den Energiegehalt (für Volllast; erhöhe die Menge von zweiten Kraftstoff bei Teillastbetrieb)
- Gemischtemperatur beim Zylindereinlass zwischen 50 bis 130° C.

Vom oben genannten Bereich an Parametern wird nun ein Start-Parametersatz abhängig vom gegebenen Typ der Brennkraftmaschine (Größe der Brennkraftmaschine, Drehzahl, geometrisches Verdichtungsverhältnis, verfügbare Kraftstoffe) gewählt.

Als zweiter Schritt werden der gewählte erste Kraftstoff und Luft vorgemischt, um eine homogene brennbare Mischung bei einem gewünschten Luftkraftstoffverhältnis Lambda zu erhalten. Das brennbare Gemisch soll dabei mager sein (das heißt Lambda soll hoch sein), um geringe NOx Emissionen zu erreichen. Dazu bestehen verschiedene Möglichkeiten, beispielsweise über einen Vergaser oder einen Gasmischer oder über ein Port-Injection-Ventil oder einer Gaseindüsung direkt in die Brennkammer.

Wähle nun bestimmte Parameter aus dem breiten Parameter und betreibe die Brennkraftmaschine. Messe den Wirkungsgrad der Brennkraftmaschine, die Menge an Emissionen (NOx und Kohlenwasserstoffe, vorzugsweise auch Kohlenmonoxid), die Schwerpunktlage und die Brenndauer. Schwerpunktlage und Brenndauer können beispielsweise aus der Messung von Zeitvariationen des Zylinderdrucks abgeleitet werden, wie es dem Fachmann geläufig ist.

Sind Wirkungsgrad und Emissionen der Brennkraftmaschine bereits in einem gewünschten Bereich, so wird der ursprüngliche Parametersatz beibehalten.

Ist die Brenndauer zu lang (das heißt, der Wirkungsgrad zu gering und/oder die Emissionen zu hoch, im speziellen die Kohlenwasserstoffemissionen), beispielsweise die Brenndauer ist länger als 20 bis 30° Kurbelwinkel unabhängig von der Drehzahl der Brennkraftmaschine, dann erhöhe die Temperatur der Zylinderladung, beispielsweise durch Erhöhen der Einlasstemperatur des Gemisches und/oder durch Erhöhen der Restgase im Zylinder und/oder erhöhe die Menge von zweitem Kraftstoff, welche der brennbaren Mischung zugemischt wird und beachte dabei, dass je höher die Temperatur der Zylinderladung ist, desto geringer ist die erforderliche Menge an zweitem Kraftstoff und umgekehrt. Zur Verlängerung der Brenndauer wird also die Temperatur der Zylinderladung durch Verringerung einer internen AGR-Rate verringert, zur Verkürzung der Brenndauer die Temperatur der Zylinderladung durch Erhöhung einer internen AGR-Rate erhöht. Bei der internen AGR handelt es sich im Gegensatz zu einer gekühlten externen AGR um eine ungekühlte, also "heiße" AGR.

Aus wirtschaftlichen Überlegungen kann es bevorzugt sein, die Menge an zweitem Kraftstoff so gering wie möglich zu halten (aber nicht so gering, dass die Schwerpunktlage der Verbrennung nicht mehr beeinflusst werden kann) sowie konstant zu halten und nur die Temperatur der Zylinderladung zu erhöhen.

Betreibe die Brennkraftmaschine weiter mit der veränderten Temperatur und prüfe die Brenndauer im Hinblick auf Wirkungsgrad der Brennkraftmaschine und Emissionen. Wenn die Brenndauer immer noch zu lang ist, erhöhe die Temperatur des brennbaren Gemisches weiter, vorzugsweise ohne dabei die Menge an zweitem Kraftstoff zu erhöhen (wenn wirtschaftliche Überlegungen zutreffen).

Ist die Brenndauer nun zu kurz (Wirkungsgrad und Emissionen sind in Ordnung, aber der Zünddruck im Zylinder ist zu groß und/oder die Druckanstiegsrate ist zu steil), verringere die Temperatur der Zylinderladung, vorzugsweise ohne dabei die Menge an zweitem Kraftstoff zu verändern. Wiederhole diese Prozedur, bis die Brenndauer innerhalb eines gewünschten Bereiches liegt. Der Zünddruck (englisch *peak firing pressure*) und Druckgradienten sind geeignete Indikatoren für mechanische Belastungen auf die Brennkraftmaschine, wobei ein hoher Zünddruck und große Gradienten hohe mechanische Belastungen bedeuten.

Ein engerer Parametersatz könnte so aussehen (der erste Kraftstoff ist dabei Erdgas, der zweite Kraftstoff Diesel):
- Einspritzzeitpunkt des zweiten Kraftstoffes bei 80° bis 60° vor Zünd-OT.
- Der zweite Kraftstoff fungiert als Quelle der Selbstzündung
- Gemisch mit Luftüberschuss und AGR, Lambda zwischen 2,3 und 2,6 oder 2,6 bis 2,9, und interner AGR in einem Bereich von 3 bis 20 %
- Menge des zweiten Kraftstoffe (beispielsweise Diesel) 1 bis 7 % bezogen auf den Energiegehalt
- Gemischtemperatur bei Zylindereinlass 70 bis 100° C

Ein spezifisches Beispiel kann so aussehen, wobei der erste Kraftstoff Erdgas, der zweite Kraftstoff Diesel sei:
- Einspritzzeitpunkt des zweiten Kraftstoffes 70° vor Zünd-OT
- Der zweite Kraftstoff fungiert als Quelle der Selbstzündung
- Gemisch mit Luftüberschuss und AGR, Lambda gleich 2,4 und interne AGR 10%
- Menge an zweitem Kraftstoff (beispielsweise Diesel) 5 % bezogen auf den Energiegehalt
- Gemischtemperatur bei Zylindereinlass 75° C

Es ist vorgesehen, dass
- der Mitteldruck (engl. *break mean effective pressure,* BMEP) zwischen 14 und 26 bar liegt
- das Verdichtungsverhältnis ε zwischen 10 und 14 liegt und
- das Einlassventilschließen bei 1 mm Hub zwischen 30° vor dem unteren Totpunkt und 30° nach dem unteren Totpunkt während des Einlasstaktes liegt.

Die Erfindung wird anhand der Figuren näher erläutert. Im Hinblick auf die Figuren wird Diesel als Beispiel für den zweiten Kraftstoff diskutiert.
- Fig. 1: zeigt die normalisierte Energiefreisetzungsrate (engl . *heat release rate)* gegen den Kurbelwinkel aufgetragen nach dem Stand der Technik im Vergleich zur vorliegenden Erfindung,
- Fig. 2: zeigt den Effekt von erhöhter interner AGR, erhöhter Dieselmenge oder Ladungstemperatur oder verzögerter Einspritzzeit auf die Verbrennung für die vorliegende Erfindung,
- Fig. 3: zeigt die Kompensation entgegengesetzt wirkender Änderungen ausgelöst von einem Parameter durch Änderung eines anderen Parameters in die entgegengesetzte Richtung,

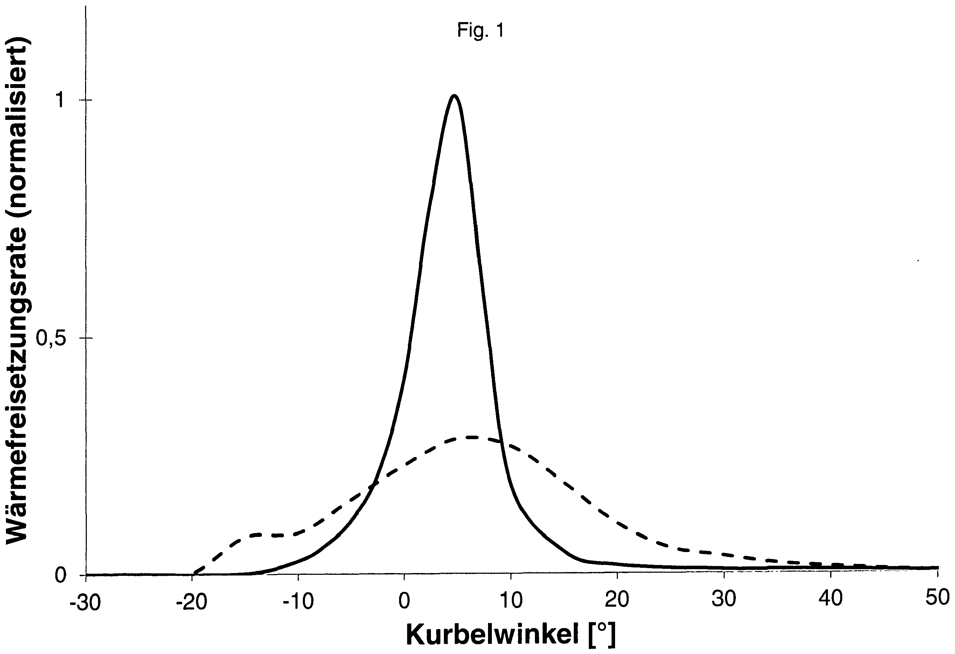

Figur 1 zeigt die normalisierte Energiefreisetzungsrate aufgetragen gegen den Kurbelwinkel in Grad nach dem oberen Totpunkt. Negative Werte bedeuten dabei, dass das Ereignis vor dem Zünd-OT stattfindet. Die Energiefreisetzungsrate (engl. *heat release rate)* wurde bereits erläutert und ist ein Maß für die Charakteristik der Verbrennung.

Die strichlierte Linie stellt die normalisierte Energiefreisetzungsrate für die Verbrennung in einem Standardgasmotor dar. Die ausgezogene Linie stellt die normalisierte Energiefreisetzungsrate dar, wie sie durch die vorliegende Erfindung erreicht wird. Man erkennt, dass das Verbrennungsereignis, wie es durch die vorliegende Erfindung erreicht wird, enger und zentrierter um den oberen Totpunkt ist als die Verbrennung nach dem Stand der Technik.

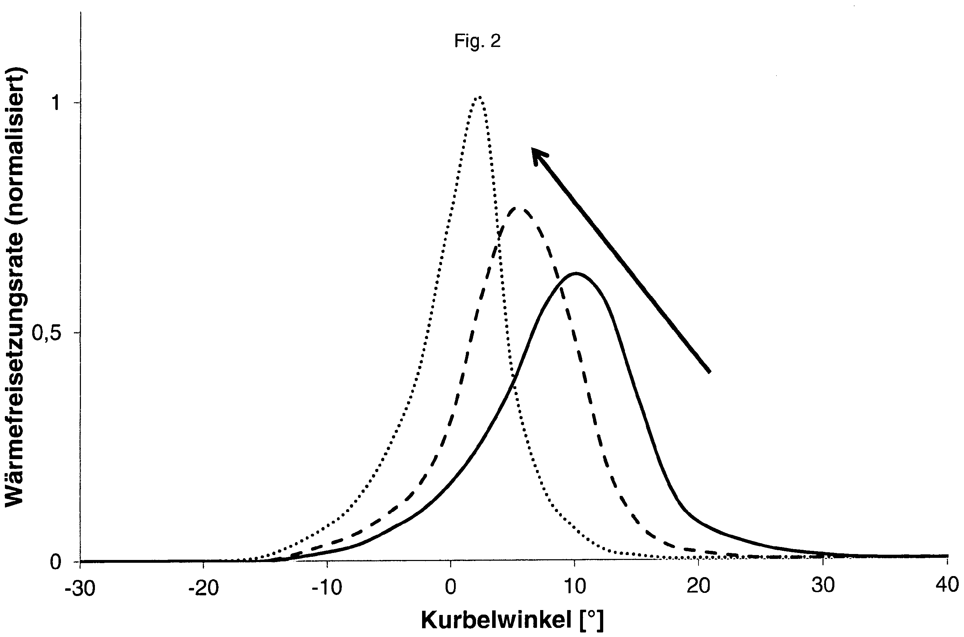

Figur 2 zeigt schematisch den Effekt der Erhöhung von interner AGR, der Erhöhung der Menge an Diesel oder Erhöhung der Ladungstemperatur oder der Verzögerung des Einspritzzeitpunktes auf die Verbrennung gemäß der Erfindung. Der Pfeil signalisiert dabei wie die Verbrennung auf die jeweilige Erhöhung der erwähnten variablen AGR, Menge an Diesel oder Ladungstemperatur reagiert bzw. auf die Verzögerung im Einspritzzeitpunkt des zweiten Kraftstoffes.

Man erkennt, dass durch Erhöhung der internen AGR, der Erhöhung der Ladungstemperatur oder durch Erhöhung der Menge an Diesel oder durch späteres Einspritzen des zweiten Kraftstoffes die Verbrennungsgeschwindigkeit erhöht wird und die Verbrennungslage nach früher verschoben wird. Dabei wurde jeweils nur einer der Parameter (interne AGR, Einlasstemperatur oder Dieselmenge) geändert, während die anderen konstant gehalten wurde. Obwohl der jeweilige Effekt dieser Maßnahmen in seinem Betrag natürlich unterschiedlich ist, ist der qualitative Trend der gleiche.

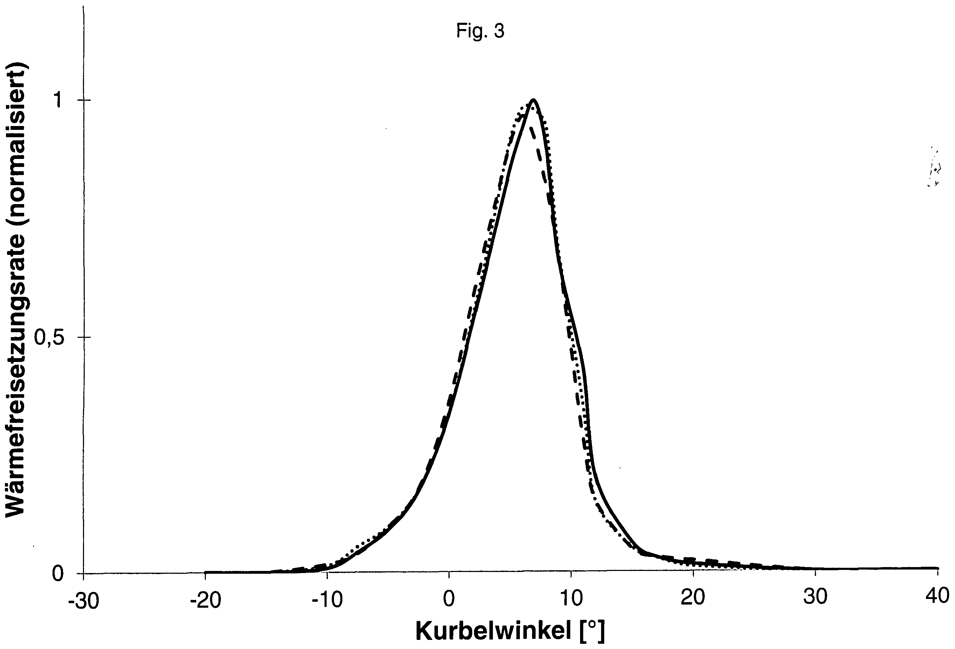

Figur 3 zeigt wie zwei der vier Parameter geändert wurden, aber in entgegen wirkende Richtung, um die gleiche Brennungslage zu erreichen. Auf solche Weise können jeweilige Änderungen ausgeglichen werden, beispielsweise, dass bei einer Erhöhung der internen AGR, die Menge an Dieselkraftstoff oder die Einlasstemperatur (oder beides) verringert werden müsste, um die gleiche Verbrennungslage zu erhalten.

Die durchgezogene, die punktierte und die strichlierte Kurve beziehen sich auf das gleiche Parameterset. Die Figur zeigt, dass durch die Änderung individueller Parameter das Verbrennungsereignis auf die gleiche Position eingestellt werden kann.

## Patentansprüche

1. Verfahren zum Betreiben einer Selbstzündungs-Brennkraftmaschine, mit wenigstens einem Zylinder und einem in dem wenigstens einen Zylinder (2) bewegbaren Kolben (3), das Verfahren umfassend die Schritte von:
- Bilden eines zündfähigen Gemisches durch weitestgehend homogenes Mischen eines ersten Kraftstoffes (F1) und Luft (A),
- Einführen dieses Gemisches in den wenigstens einen Zylinder (2),
- Verdichten des zündfähigen Gemisches mit dem Kolben (3) in einem Verdichtungstakt,
- während des Verdichtungstaktes aber vor Start der Verbrennung Zuführen eines zweiten Kraftstoffes (F2) zu dem zündfähigen Gemisch, wodurch eine Zylinderladung geschaffen wird, wobei der zweite Kraftstoff (F2) eine höhere Neigung zur Selbstzündung aufweist als der erste Kraftstoff (F1),
- Fortsetzen des Verdichtungstaktes bis die Verbrennung einsetzt an jenen Punkten im Zylinder (2), wo die Konzentration des zweiten Kraftstoffes (F2) und/oder die Temperatur des Gemisches am höchsten ist,
**dadurch gekennzeichnet, dass** eine Temperatur der Zylinderladung, oder die Menge des zweiten Kraftstoffes (F2), welche dem zündfähigen Gemisch zugeführt wird, oder eine Kombination davon, so gewählt ist, dass eine gewünschte Brenndauer erreicht werden kann, wobei durch ein späteres Einspritzen des zweiten Kraftstoffes (F2) die Verbrennungsgeschwindigkeit erhöht und die Schwerpunktslage der Verbrennung nach früh verschoben wird und dass
- der Einspritzzeitpunkt des Kraftstoffes, welche eine höhere Neigung zur Selbstzündung aufweist, zwischen 80° bis 60° vor Zünd-OT gewählt wird,
- ein Lambdawert zwischen 1,8 und 2,3 oder 2,3 bis 2,6 oder 2,6 bis 2,9 oder 2,3 bis 2,9 gewählt wird
- eine interne AGR Rate zwischen 3 bis 20 % gewählt wird
- die Menge des Kraftstoffes mit der höheren Neigung zur Selbstzündung zwischen 1 bis 7 % bezogen auf den Energiegehalt der Ladung gewählt wird,
- die Gemischtemperatur bei Zylindereinlass zwischen 70° bis 100° C gewählt wird
und dass
- der Mitteldruck zwischen 14 und 26 bar liegt
- das Verdichtungsverhältnis (ε) zwischen 10 und 14 liegt und
- das Einlassventil schließen bei 1mm Hub zwischen 30° vor dem unteren Totpunkt und 30° nach dem unteren Totpunkt während des Einlasstaktes liegt.

2. Verfahren nach Anspruch 1, **dadurch gekennzeichnet, dass** der erste Kraftstoff (F1) Erdgas oder eine Mischung von Erdgas und CO₂ ist, solchermaßen, dass die Menge von CO₂ und CH₄ größer als 80 % ist.

3. Verfahren nach Anspruch 1 oder 2, **dadurch gekennzeichnet, dass** der zweite Kraftstoff (F2) eine Cetanzahl zwischen 30 und 70, vorzugsweise zwischen 40 und 60 aufweist.

4. Verfahren nach wenigstens einem der Ansprüche 1 bis 3, **dadurch gekennzeichnet, dass** der zweite Kraftstoff (F2) dem wenigstens einen Zylinder (2) zu einem späteren Zeitpunkt zugeführt wird als der erste Kraftstoff (F1).

5. Verfahren nach wenigstens einem der vorangegangenen Ansprüche, **dadurch gekennzeichnet, dass** die Temperatur im Zylinder (2) entweder durch eine interne AGR Rate während des Gaswechsels oder durch zurückgeführte externe Abgasrückführung gesteuert oder geregelt wird.

6. Ein Selbstzündungs-Brennkraftmaschine mit wenigstens einem Zylinder und einem Kolben bewegbar in dem wenigstens einem Zylinder und einer Einspritzeinheit zum Einspritzen des zweiten Kraftstoffes mit einer elektronischen Steuer- oder Regeleinheit, die dazu eingerichtet ist, ein Verfahren nach wenigstens einem der Ansprüche 1 bis 5 auszuführen.

## Claims

1. A method for operating a compression ignition engine, the engine having at least one cylinder and a piston moveable in the at least one cylinder, and the method comprising the steps of:
- forming a combustible mixture by mixing generally homogeneously a first fuel (F1) and air (A) and introducing this mixture into the at least one cylinder (2)
- compressing the combustible mixture with the piston (3) in a compression stroke
- during the compression stroke but before start of combustion adding a second fuel (F2) to the combustible mixture, thus creating a cylinder charge, the second fuel (F2) being easier to autoignite than the first fuel (F1)
- continuing the compression stroke until combustion starts at those locations in the cylinder (2) where concentration of the second fuel (F2) and / or temperature of the mixture is highest,
**characterized in that** a temperature of the cylinder charge, or the amount of second fuel (F2) added to the combustible mixture or a combination of both is being chosen such that a desired duration of combustion can be achieved, wherein injecting the second fuel later increases the combustion speed and shifts the combustion phasing earlier and that
- the injection time of the fuel being easier to auto-ignite is chosen between 80° to 60° BEFORE FIRING TDC is chosen;
- a lambda value between 1,8 and 2,3 or 2,3 to 2,6 or 2,6 to 2,9 or 2,3 to 2,9 is chosen,
- an internal EGR rate between 3 to 20 % is chosen,
- the amount of fuel being easier to auto-ignite is chosen between 1 to 7 % with respect to the energy content of the change,
- the mixture temperature at intake of cylinder is chosen between 70° to 100°C
and wherein
- the brake mean effective pressure is between 14 and 26 bar,
- the compression ratio (ε) is between 10 and 14 and
- the intake valve closing at 1 millimeter lift is between 30 degrees before bottom dead center and 30 degrees after bottom dead center during the intake stroke.

2. Method according to claim 1, **characterized in that** the first fuel is natural gas or a mixture of natural gas and CO₂ such that the amount of CO₂ and CH4 ist higher than 80%.

3. Method according to claim 1 or 2, **characterized in that** the second fuel has a cetane number between 30 and 70, preferably between 40 and 60.

4. Method according to at least one of the claims 1 through 3, **characterized in that** the second fuel (F2) is supplied at a later point in time to the at least one cylinder of the internal combustion engine than the first fuel (F1).

5. Method according to any of the preceding claims, **characterized in that** the in-cylinder temperature is controlled either by an internal EGR-rate kept in the combustion chamber during gas exchange process, or by an external EGR rate recirculated in the intake system.

6. A compression ignition engine, the engine having at least one cylinder and a piston moveable in the at least one cylinder, and an injector to inject the second fuel, having an electronic control unit configured to operate according to a method according to at least one of the claims 1 through 5.

## Revendications

1. Procédé pour faire fonctionner un moteur à combustion interne à auto-allumage, comprenant au moins un cylindre et un piston (3) mobile dans le au moins un cylindre (2), le procédé comportant les étapes suivantes :
- formation d'un mélange inflammable par mélange le plus homogène possible d'un premier combustible (F1) et d'air (A),
- introduction de ce mélange dans le au moins un cylindre (2),
- compression du mélange inflammable au moyen du piston (3) dans une course de compression,
- pendant la course de compression, mais avant le début de la combustion, amenée d'un deuxième combustible (F2) au mélange inflammable, moyennant quoi une charge du cylindre est créée, dans lequel le deuxième combustible (F2) présente une plus forte tendance à l'auto-allumage que le premier combustible (F1),
- poursuite de la course de compression jusqu'à ce que la combustion commence aux points dans le cylindre (2) où la concentration du deuxième combustible (F2) et/ou la température du mélange sont les plus élevées,
**caractérisé en ce qu'**une température de la charge du cylindre, ou la quantité du deuxième combustible (F2), laquelle est amenée au mélange inflammable, ou une combinaison de celles-ci, est sélectionnée de telle sorte qu'une durée de combustion souhaitée peut être atteinte, dans lequel une injection plus tardive du deuxième combustible (F2) permet d'augmenter la vitesse de combustion et d'avancer le moment fort de la combustion, et **en ce que**
- le calage de l'injection du combustible présentant une plus forte tendance à l'auto-allumage est sélectionné dans une plage allant de 80° à 60° avant le point mort haut d'allumage,
- une valeur lambda comprise entre 1,8 et 2,3 ou dans une plage allant de 2,3 à 2,6 ou de 2,6 à 2,9 ou de 2,3 à 2,9 est sélectionnée
- un taux de recirculation interne des gaz d'échappement dans une plage de 3 à 20 % est sélectionné
- la quantité du combustible présentant une plus forte tendance à l'auto-allumage est sélectionnée dans une plage allant de 1 à 7 % par rapport à la valeur énergétique de la charge,
- la température du mélange à l'entrée du cylindre est sélectionnée dans une plage allant de 70° à 100 °C
et **en ce que**
- la pression moyenne est comprise entre 14 et 26 bar
- le rapport volumétrique (ε) est compris entre 10 et 14, et
- la fermeture de la soupape d'admission se situe, pour une course de 1 mm, entre 30° avant le point mort bas et 30° après le point mort bas pendant la course d'admission.

2. Procédé selon la revendication 1, **caractérisé en ce que** le premier combustible (F1) est du gaz naturel ou un mélange de gaz naturel et de CO₂ tel que la quantité de CO₂ et de CH₄ est supérieure à 80 %.

3. Procédé selon la revendication 1 ou 2, **caractérisé en ce que** le deuxième combustible (F2) présente un indice de cétane mesuré compris entre 30 et 70, de préférence entre 40 et 60.

4. Procédé selon au moins l'une des revendications 1 à 3, **caractérisé en ce que** le deuxième combustible (F2) est amené au au moins un cylindre (2) à un moment plus tardif que le premier combustible (F1).

5. Procédé selon au moins l'une des revendications précédentes, **caractérisé en ce que** la température dans le cylindre (2) est commandée ou régulée soit par un taux de recirculation interne des gaz d'échappement pendant l'échange des gaz soit par une recirculation externe des gaz d'échappement renvoyés.

6. Moteur à combustion interne à auto-allumage comprenant au moins un cylindre et un piston mobile dans le au moins un cylindre et une unité d'injection destinée à injecter le deuxième combustible, laquelle est pourvue d'une unité de commande ou de régulation électronique qui est conçue pour mettre en oeuvre un procédé selon au moins l'une des revendications 1 à 5.
